# EUROPEAN PATENT SPECIFICATION

(11) **EP 1 555 652 B1**
(45) Date of publication and mention of the grant of the patent: **14.11.2007**
(21) Application number: 04001014.2
(22) Date of filing: 19.01.2004
(51) Int. Cl.: G10L 15/26, B60R 16/02

(54) **Activation of a speech dialogue system**
Betätigung eines Sprachdialogsystems
Activation d'un système de dialogue vocal

(43) Date of publication of application: 20.07.2005
(73) Proprietor: Harman Becker Automotive Systems GmbH, 76307 Karlsbad (DE)
(72) Inventor: König, Lars, 89075 Ulm (DE)
(74) Representative: Grünecker, Kinkeldey, Stockmair & Schwanhäusser Anwaltssozietät

(56) References cited:
- EP-A- 0 911 808
- EP-A- 1 054 390
- WO-A-02/05264
- FR-A- 2 808 915
- US-A1- 2003 191 646

## Description

The invention relates to an apparatus for controlling at least one electronic device, comprising a speech dialogue system for controlling at least one of the at least one electronic devices and at least one key for controlling the electronic devices, and a method for controlling at least one electronic device.

US 2003/01 91 646 discloses a method of automatically setting voice processing parameters in a communication device, such as a wired or wireless communication device. The method comprises steps of detecting the selection of a voice recognition call, setting voice processing parameters of the communication device for voice recognition call and enabling voice communication with a voice recognition server using the voice processing parameters. This method is in particular useful for a telecommunication system of a vehicle.

Today's cars become more and more equipped with extensive audio, video, communication and driver's information systems. In most cars these devices are operated by hand and, as a consequence thereof, the driver is obliged to withdraw his attention from the traffic, leading to an increased safety risk. To overcome this problem, speech dialogue systems (SDS) have been developed which are allowing the driver or any other occupant of the vehicle to control the different electronic devices via speech commands. Those are identified by a speech recognition system and transferred to the corresponding electronic device, where they get executed. In state of the art SDS systems the application is activated via a push-to-talk lever (PTT) located on the steering wheel of the car.

The PTT lever just adds one more knob or switch to the already present plurality of other control and command switches. Thus, before the user knows about the functionality and will be able to use it, he needs either to be instructed or has to read the manual which is usually very time-consuming and in practice rarely done. Thus only a confirmed user will be able to take the full advantage of a SDS system. In contrast thereto people who are only occasionally using such a car equipped with a SDS system, e.g. a person hiring the car equipped with the SDS system, will not be aware of the functionality and therefore miss the advantages, and therein especially the security aspect, of such a SDS system.

It is therefore the task of this invention to provide an apparatus for controlling at least one electronic device and a corresponding method wherein each user, instructed or not, can profit from the advantages of a SDS system, thus leading to an enhanced comfort of use of electronic devices and in particular of electronic devices of a vehicle like a car, where in addition the security becomes improved.

This object is achieved by the apparatus according to claim 1 and the method according to claim 13.

Accordingly, there is provided an apparatus for controlling at least one electronic device, each device comprising at least one control key for controlling the electronic device, comprising a speech dialogue system (SDS) for controlling at least one of the at least one electronic devices and wherein the speech dialogue system is activated when at least one predetermined control key of an electronic device controllable by the speech dialogue system is operated.

With the inventive apparatus it is therefore possible to activate the SDS system by operating one of the control keys of the electronic device itself. Therefore even the uninstructed user will, intentionally or unintentionally, be able to start up the SDS system by simply operating one of the control keys of the electronic device which he wants to turn on, or of which he wants to change a parameter.

The apparatus according to claim 1 has furthermore another advantage with respect to an SDS system with exclusively a PTT lever, as in such a system after operating the PTT lever the user first has to choose which electronic device he wants to control, thus an overview or main menu needs to be implemented in the SDS system with a PTT lever. Therefore before reaching the possibility to control the electronic device via speech commands, the user needs to additionally announce the electronic device he is interested in. This makes the use of a conventional SDS system more complicated with respect to the apparatus according to this invention and the design of the SDS system more complex as the overview or main menu needs to be implemented.

Typical apparatus to be controlled by the inventive apparatus comprise a radio, a telephone, a navigation system, a compact disk (CD) player, a digital versatile disk (DVD) player, a compact cassette (CC) player, a board computer and/or a climate control. When used in a vehicle furthermore various functions such as the windscreen wipers or the lights may also be controlled by such an SDS system.

By activating, it is understood that the SDS system is completely powered on or turned on from a standby state. By key it is understood that both a hardkey or a softkey could be used, wherein a hardkey corresponds to, e.g., a switch or a knob or a push-button having usually one device parameter linked to it and wherein the device parameter is controlled by this hardkey, and a softkey corresponds to a key which, depending on the state the electronic device is currently in, can have various functions, e.g. one key could be used to choose out of an overview menu the electronic device one wants to switch to and the same key then can controls one device parameter of the electronic device which has been selected in the previous overview menu. By operating a control key it is understood that a key is pushed, turned, switched or the like, depending on what kind of key is used, and that by doing so the corresponding function of the key is carried out.

The SDS system is configured such that if one electronic device operable by the SDS system is already turned on and a control key of this electronic device is operated, a vocabulary set is activated enabling the SDS system to turn on or to switch to one of the other electronic devices operable by the SDS system on receipt of a corresponding speech command. This gives the user the possibility that even when he operates a control key of an electronic device which at that time he is not interested in, he can give a speech command to turn on or switch to another electronic device. For example, the user operates the volume key of the radio and then gives the speech command 'climate control' in order to control the climate control device. This is particularly advantageous if one of the control keys cannot be reached easily or if the user wants to turn on several devices at once.

In a preferred embodiment of the apparatus, the at least one predetermined control key can comprise the on/off switch of the electronic device. Therefore each time an electronic device controllable by the SDS system is switched on also automatically the SDS system is activated, allowing the user to control the electronic device via speech commands. Thus even if the user may not be aware of the presence of an SDS system, by operating the on/off switch he acquires the possibility to control the device via speech commands, thus enhancing the comfort of use of the SDS system and the electronic device.

According to a further preferred embodiment of the apparatus, the at least one predetermined control key can comprise at least one of the control keys which are controlling the electronic device, when the electronic device has already been turned on. This means, for example, for the case that the radio has already been turned on, the SDS system is also activated when the user changes, e.g., the volume level or the radio station by operating the corresponding control key. Then if, for example, he is searching for a certain radio station he does not have to push the radio station search key several times, but can comfortably just give the corresponding speech command, such as 'next radio station' to reach the desired radio station. If on the other hand the electronic device is not switched on, an operation of one of the control keys other than the turn on/off key shall not activate the SDS system. This again enhances the comfort of use of the SDS system.

According to an advantageous embodiment, the apparatus for controlling at least one electronic device can activate a predetermined vocabulary set depending on the predetermined control key which is operated. By doing so, it is not needed to upload the whole vocabulary which may be identified by the SDS system, into an internal memory of the SDS system. This allows to either use a smaller internal memory, as not all vocabulary is needed to be stored, or to provide more vocabularies which can be understood by the SDS system depending on the electronic device. Therefore either the cost of the SDS system can be reduced or the comfort of use can be further enhanced.

In a particularly advantageous embodiment of the apparatus, the speech dialog system can comprise a vocabulary set for each electronic device operable by the SDS system, and the SDS system can be configured such that when a predetermined control key of an electronic device operable by the speech dialog system is operated the corresponding vocabulary set is activated. If it is adopted that when a user, for example, turns on the radio, that he wants to control this electronic device, it is advantageous to only provide to the SDS system the vocabulary set which corresponds to this electronic device, namely the radio. Thus even if the SDS system may be capable of analyzing more than just the vocabulary for the radio, the application can be speeded up, as with a restricted vocabulary set only containing the speech commands related to the radio and eventually some more vocabulary allowing the user to switch from one device to another, the time to analyze speech commands can be reduced. In addition the vocabulary set for each device may also contain certain commands of other devices, other than just the corresponding turn on or switch off command, allowing the user to perform certain actions related to other devices. As an example the vocabulary set of the radio may be such that on activating a control key of the radio the user can give an order related to the cd player, like "change to first song" or an order to the telephone, like "call the number ...".Furthermore with a restricted vocabulary set a slower analyzing algorithm or module may be used in the SDS system to achieve the same capabilities making the device cheaper.

In a further preferred embodiment, the apparatus for controlling electronic devices can comprise acoustic and/or optical output means being configured to ouput a message after the SDS system is activated, in particular, informing about the turned on electronic device and/or the activation of the SDS system. Thus the user knows which device is activated and whether the SDS system is activated or not. As an example the acoustic message output after a key has been operated, could be 'speech dialogue system activated' and the optical output means might comprise a corresponding lamp on the dashboard which is switched on or a message on an eventually present multimedia screen.

In a variant the apparatus for controlling electronic devices can further comprise a key, in particular a hardkey, for turning on and/or turning off the SDS system. This key should be placed at a suitable place, for example, at the steering wheel and allows the user to additionally activate or turn off the SDS system, independent of operating a control key of an electronic device. If the user does not want to use SDS system anymore, the centralized key therefore gives the opportunity to stop the SDS system in an easy and safe way.

In an advantageous embodiment the SDS system can be configured such that it turns off when a corresponding speech command is detected. Whenever wished the SDS system can therefore be terminated upon a simple speech command. This is advantageous in the case that the user just wishes to turn up the volume of the radio or the CD player, but does not wish any further operations to be executed and therefore wants to stop the SDS system. The corresponding speech command could be "Volume up, stop SDS".

In a further variant the SDS system can be configured such that it turns off after a predetermined period during which no speech command has been detected. In order to prevent unnecessary power consumption of the SDS system, it is wise to shut off the SDS system automatically. This also will lead to a longer lifetime of the SDS system.

In a preferred embodiment the control keys can be configured such that they can be operated in two ways, whereby in only one case the SDS system is activated.

This feature gives the user the opportunity to decide by himself whether he wants the SDS system to be operable or not. The control key could, for example, be configured such that when it is only briefly pressed the SDS system is not activated, whereas if the control key is pressed for a prolonged time the SDS system is also activated, in addition to the parameter that is linked to the control key. Or the configuration could be vice versa, that is the SDS is system is activated when the control key is pressed for a prolonged time, and not activated when the control key is pressed only briefly.

In a further variant at least one of the predetermined control keys can be a hardkey. Hardkeys have the advantage that they are not linked to several devices and/or functions of these devices and are therefore easy to understand for the user. Combining such a hardkey with the activation of the SDS system thus enhances the comfort of use of the apparatus for controlling electronic devices.

The invention further provides a vehicle, in particular a car, with an apparatus for controlling electronic devices as previously described. Furthermore, the invention also relates to the use of an apparatus for controlling electronic devices, as previously described, in a vehicle, in particular a car.

In addition, the invention provides a method for controlling at least one electronic device according to claim 13.

With the inventive method it is therefore possible to activate the SDS system by operating one of the keys of the electronic device itself. Therefore also an uninstructed user will, intentionally or unintentionally, be able to start up the SDS system by simply operating one of the keys of the electronic device which he wants to turn on, or of which he wants to change a parameter.

In a preferred embodiment the step of activating can comprise activating a predetermined vocabulary set, in particular the vocabulary set corresponding to the operated key. Therefore not the whole vocabulary which may be identified by the SDS system, needs to be uploaded from a suited storage means into an internal memory of the SDS system. This allows either the use of a smaller internal memory, due to less data, or more vocabularies which can be understood by the SDS system depending on the electronic device, can be provided to the user. Therefore either the cost of the SDS system can be reduced or the comfort of use can be enhanced.

In another preferred embodiment the method for controlling electronic devices can comprise a step of terminating the SDS system upon detection of a corresponding speech command. Whenever wished the SDS system can therefore be terminated upon a simple speech command given by the user. If the user wants to only turn up the volume of the radio or the CD player, but does not wish any further operations to be executed, he can easily stop the SDS system.

In a further variant the method for controlling electronic devices can comprise a step of terminating the SDS system after a predetermined period during which no oral command has been detected by the SDS system which prevents unnecessary power consumption of the SDS system and leads to a longer lifetime of the SDS system.

The invention further provides a computer programme product directly loadable into the internal memory of a digital computer comprising software code portions for performing the steps of one of the methods described above.

The invention also provides a computer programme product stores on a medium readable by a computer system comprising computer readable programme means for causing a computer to perform the steps of one of the previously described methods.

In the following examples of the inventive apparatus for controlling electronic devices and the method for controlling at least one electronic device are described with respect to the Figures, wherein:
Fig. 1 shows a dashboard of a vehicle illustrating several electronic devices being controlled by an apparatus for controlling electronic devices according to the invention,
Fig. 2 shows a flow chart of the functioning of the inventive apparatus, wherein the speech dialogue system (SDS) is activated by turning on one electronic device operable by the SDS system,
Fig. 3 shows a flow chart of a second embodiment concerning the functioning of the inventive apparatus, wherein the SDS system is activated following the operation of a control key of an electronic device operable by the SDS system, wherein the electronic device has already been turned on earlier, and
Figs. 4a and 4b show two embodiments of a control key that according to the invention is configured such that it can be operated in two ways, whereby only for one case the SDS system is activated.

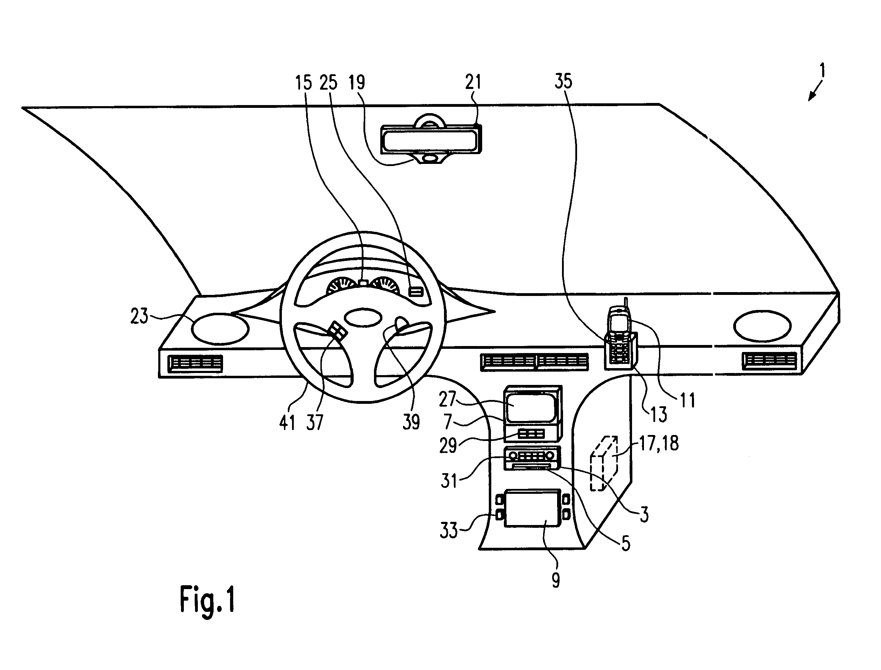

Fig. 1 shows a cockpit 1 of a vehicle which comprises several electronic devices: a radio device 3 comprising eventually also a compact disk (CD) player 5, or as a variant a digital versatile disk (DVD) player or compact cassette (CC) player, a navigation system 7, a climate control 9, a telephone which can be a telephone fixed to the vehicle (not shown) or a mobile telephone 11 which can be held by a mobile telephone holder 13 and a board computer 15. The cited electronic devices represent only a certain choice of possibilities, further variants may comprise a television, an internet connecting device or a computer game console.

There is also provided the inventive apparatus 17 for controlling the electronic devices comprising the SDS system 18 which in this configuration is capable of operating the abovementioned electronic devices. Part of the apparatus 17 is a microphone 19 which in this embodiment is arranged at the rear mirror 21, but which of course could also be provided at a different location or at several different locations. It could, for example, be envisaged that at each passenger location there is one microphone 19 in the vicinity.

The SDS system 17 is interconnected with output means, such as loudspeakers 23, a status indicating device 25 which is located in or close to the field of view of the driver, or a multimedia screen 27 which in this embodiment is part of the navigation system 7.

The electronic devices can be controlled by control keys 29, 31, 33, 35 controlling respectively the navigation system 7, the radio and CD player device 3, the climate control 9 and the mobile telephone or telephone 11. Those control keys can either be hardkeys, thus one control key is related to one function of the electronic device, or softkeys, for which more than one function can be controlled by one physical key, depending on the current status the electronic device is in. In addition there are further keys 37, 39 provided at the steering wheel 41 or in the vicinity of the steering wheel, so that those keys can be operated by the driver without having to remove his hands from the steering wheel. In this example reference numeral 37 corresponds to several control keys which can be used to control several electronic devices, e.g. a softkey could be dedicated to turn on the devices or switch from one to the other, and another key could be able to control specific functions concerning the electronic devices like changing the volume, or inputting a new destination for the navigation system, or changing the temperature of the climate control. Key 39 represents a push-to-talk (PTT) key allowing to turn the SDS system on and off independently of the possibility to do the same by operating one of the control keys 29, 31, 33, 35, 37 of the electronic devices operable by the SDS system.

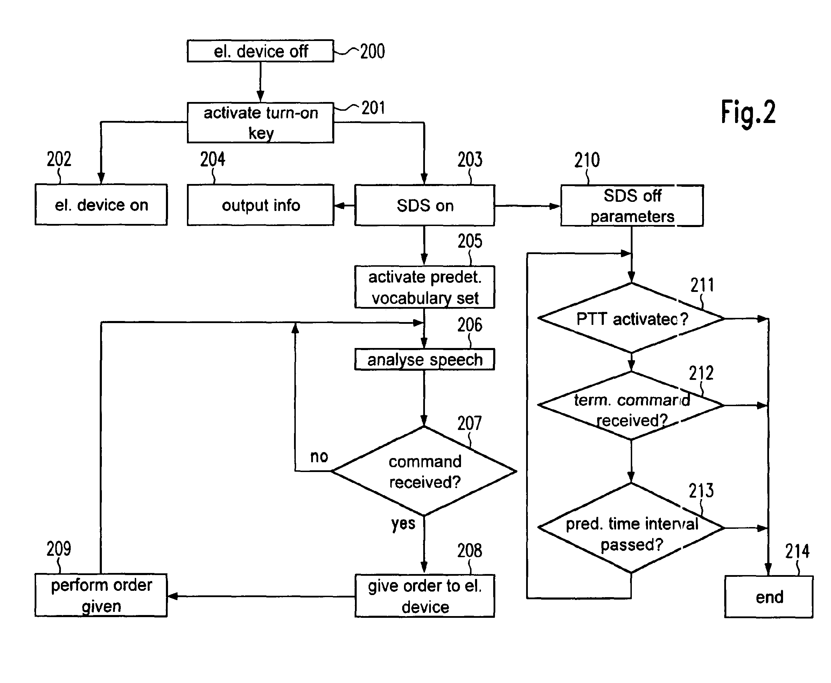

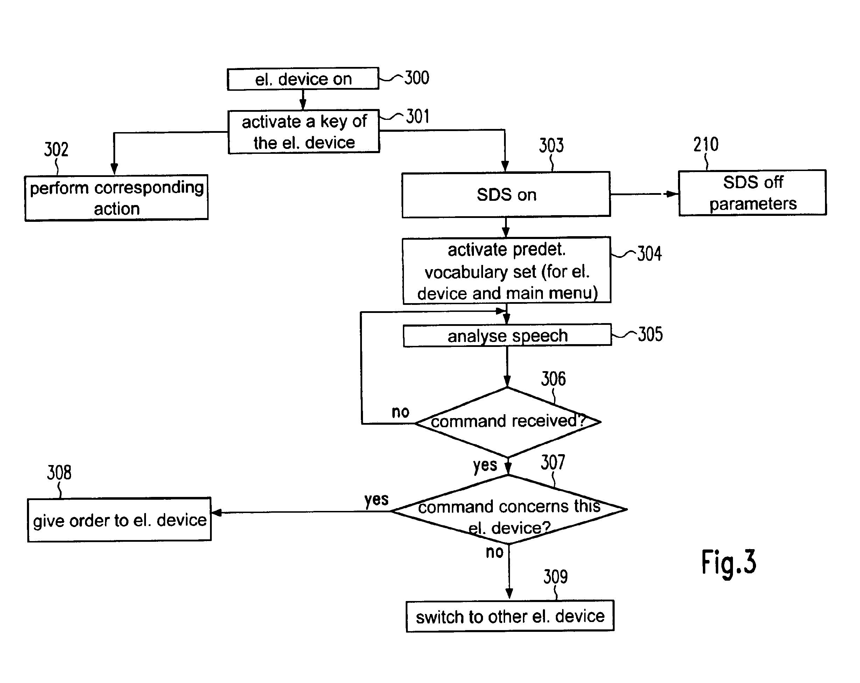

The way the apparatus for controlling the electronic devices 17 with the SDS system 18 is functioning will be described in detail with respect to Figs. 2 and 3 which are representing two different ways of using the apparatus for controlling the electronic devices. Those two ways are not excluding one from each other, but can be applied in parallel.

Fig. 2 shows one way to use the apparatus for controlling electronic devices 17. In this case, at the beginning the electrical device concerned is in an off state 200. This means that it is either completely powered down or in a standby mode. In a next step 201, the user operates the turn on key of the electronic device. By doing so, the electronic device is switched on 202 and essentially at the same time the SDS system is activated 203. In step 204 a acoustic or optical signal is output via the output means 23, 25 and/or 27 to give the user the information that the electronic device has been switched on and that the SDS system has also been switched on.

The SDS system then activates a predetermined vocabulary set 205 which, for example, contains all the vocabulary needed to control the electronic device which has been turned on. By activating a vocabulary set it is understood that, for exemple, the vocabulary is uploaded from a CD-ROM or a DVD into the internal memory of the SDS system or loading the vocabulary from a relatively slow permanent memory (ROM) into a faster type of memory.

Then the signals captured by the microphone 19, as shown in Fig. 1, are filtered to remove background noise and analyzed by the SDS system 18 to identify speech commands 206. In step 207 the SDS system decides whether a speech command has been received. In the case that no command has been received, the SDS system reverts to step 206. If however a speech command has been received, the SDS system gives the corresponding order to the electronic device 208. Then in step 209 this order is carried out by the electronic device 209.

Thus, for example, when the user switches on the radio and gives the order 'next radio station' the SDS system will be able to analyze this speech command, as 'next radio station' is part of the predetermined vocabulary set of the radio device. Thus having understood this command the SDS system gives the corresponding signal to the radio which then executes this order and switches to the next radio station.

In a variant, the predetermined vocabulary set may also include vocabularies concerning the other electronic devices, therefore giving the user the possibility to also switch to another electronic device. For example, when the radio is switched on and the user gives the speech command 'navigation system on', the SDS system will be capable of understanding this command and proceed with the necessary steps and switch to the navigation system. Then of course the SDS system will activate the vocabulary set corresponding to the navigation system and terminate the one of the radio.

The steps 210 through 214 are performed in parallel to the above described steps and are controlling the turn off parameters of the SDS system. If in step 211 it has been detected that the PTT lever has been operated 39 the SDS system application is terminated 214. Terminating in this respect means either power off the SDS system or putting it into the standby mode. If no operation of the PTT lever 39 has been detected it is checked whether a termination speech command has been received from the user 212. Should this be the case the application is terminated 214. Should this not be the case it is checked whether a predetermined time interval has been passed 213. If this is the case then the SDS system also terminates 214. Actually steps 211 to 213 are continuously repeated until one of the three is satisfied leading to the termination of the application. Of course the SDS system also terminates when the electronic device is turned off.

Fig. 3 shows a second possibility on how to apply the apparatus for controlling electronic devices according to the invention. In this case one of the electronic devices has already been turned on before 300. Then the user operates one of the keys of this electronic device 301. By doing so, the intended functionality of the key is carried out 302. For example, the radio is already turned on and the user wishes to change the radio station and operates the corresponding key.

Essentially at the same time the SDS system is activated 303. The output means 23, 25, 27 provide signals to inform the user of the activated electronic device and the activated SDS system (not shown). Then the corresponding predetermined vocabulary set is activated 304 which, for instance, contains all the vocabulary needed to control the radio, and eventually also the vocabulary corresponding to a main menu, allowing the control of other electronic devices controllable by the SDS system.

Then, as in Fig. 2, the signals that have been received via the microphone 19 is filtered to remove background noise and analyzed to detect speech commands 305. In the case that a speech command has been identified 306 the SDS system checks whether this command concerns the electronic device corresponding to the operated key, e.g. in this case the radio, or if the user wants to switch to another electronic device also controllable by the SDS system 307.

If the speech command concerns the electronic device corresponding to the operated key, the given order is executed 308. If the speech command concerns another electronic device, the SDS system gives the order to this second electronic device to switch on, or in the case that this electronic device is also already switched on to activate the corresponding vocabulary set to be able to then carry out the control for this second electronic device 309. Like illustrated in Fig. 2, there is also in parallel a check as to whether one of the parameters to terminate the SDS system has been fulfilled 210. The parameters are the same as the ones described in Fig. 2: detection of an operation of the PTT lever, a received termination command or an elapsed predetermined time interval.

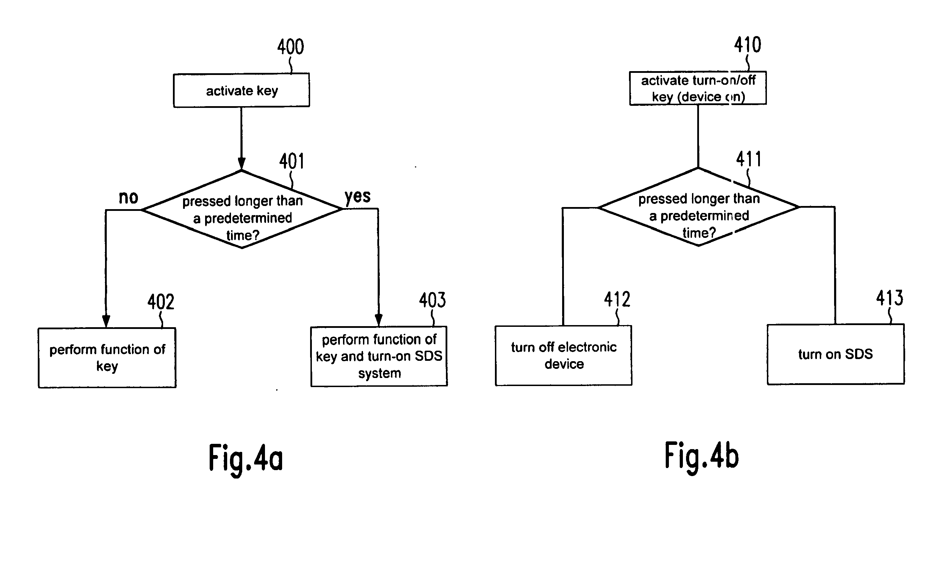

Fig. 4a shows a first embodiment of a control key that is configured such that it can be operated in two ways. After operation of the key 400 it is checked whether the control key has been pressed longer than a predetermined period. If the control key has been pressed within that predetermined time only the function attributed to the key concerning the electronic device is carried out 402. If, on the other hand, the control key has been pressed longer than that predetermined time both the attributed function of the control key concerning the electronic device is performed and the SDS system is activated 403. Thus the user can intentionally activate or not the SDS system by simply choosing the way he operates the control key. In the case of a radio, for example, following a short push on the change radio station key the radio station is changed, without the SDS system being activated, however if, for example, the user knows that he will need to push the change radio station key several times to read the desired radio station, he also has the possibility to operate the key longer than the predetermined time and will be able to use speech commands to reach the desired station.

Fig. 4b shows a second embodiment of a control key that is configured such that it can be operated in two different ways, whereby the key is the turn on/off key. In the case that the electronic device has already been switched on before 410 and that the turn on/off switch is operated again, it is checked in step 411 whether the turn on/off key has been operated longer than the predetermined time period or not. If this is the case the electronic device is turned off without activating the SDS system 412. In the case that the control key has been operated for less than the predetermined time, the SDS system is activated, should it have previously been terminated, or the outputting means indicates to the user that the SDS system is already activated 413, without however turning off the electronic device.

## Claims

1. Apparatus for controlling at least one electronic device (3, 5, 7, 9, 11, 13, 15), each device (3, 5, 7, 9, 11, 13, 15) comprising at least one control key (29, 31, 33, 35, 37) for controlling the electronic device (3, 5, 7, 9, 11, 13, 15), comprising
a speech dialog system (18) for controlling at least one of the at least one electronic devices (3, 5, 7, 9, 11, 13, 15), and
wherein the speech dialog system (18) is activated when at least one predetermined control key (29, 31, 33, 35, 37) of an electronic device (3, 5, 7, 9, 11, 13, 15) controllable by the speech dialog system (18) is operated,
**characterised in that**
the speech dialog system (18) is configured such that if one electronic device (3, 5, 7, 9, 11, 13, 15) operable by the speech dialog system (18) is already turned on and a control key (29, 31, 33, 35, 37) of this electronic device (3, 5, 7, 9, 11, 13, 15) is operated, a vocabulary set is activated enabling the speech dialog system (18) to turn on or to switch to one of the other electronic devices (3, 5, 7, 9, 11, 13, 15) operable by the speech dialog system (18) upon receipt of a corresponding speech command.

2. Apparatus according to claim 1, wherein the at least one predetermined control key (29, 31, 33, 35, 37) comprises the tum on/off switch of the electronic device (3, 5, 7, 9, 11, 13, 15)

3. Apparatus according to claim 1 or 2, wherein the at least one predetermined control key (29, 31, 33, 35, 37) comprises at least one of the keys (29, 31, 33, 35, 37) controlling the electronic device (3, 5, 7, 9, 11, 13, 15), when the electronic device (3, 5, 7, 9, 11, 13, 15) has already been turned on.

4. Apparatus according to one of the claims 1 to 3, wherein a predetermined vocabulary set is activated depending on the operated control key (29, 31, 33, 35, 37).

5. Apparatus according to one of claims 1 to 4, wherein the speech dialog system (18) comprises a vocabulary set for each electronic device (3, 5, 7, 9, 11, 13, 15) operable by the speech dialog system (18), and wherein the speech dialog system (18) is configured such that when a predetermined control key (29, 31, 33, 35, 37) of an electronic device (3, 5, 7, 9, 11, 13, 15) operable by the speech dialog system (18) is operated the corresponding vocabulary set is activated.

6. Apparatus according to one of claims 1 to 5, further comprising acoustic and/or optical output means (23, 25, 27) being configured to output a message after the speech dialog system (18) has been activated, in particular, informing about the turned on electronic device (3, 5, 7, 9, 11, 13, 15) and/or the activation of the speech dialog system (18).

7. Apparatus according to one of claims 1 to 6, further comprising a key (39), in particular a hardkey, for turning on and/or turning off the speech dialog system (18).

8. Apparatus according to one of claims 1 to 7, wherein the speech dialog system (18) is configured such that it turns off when a corresponding speech command is detected.

9. Apparatus according to one of claims 1 to 8, wherein the speech dialog system (18) is configured such that it turns off after a predetermined period during which no speech command has been detected.

10. Apparatus according to one of claims 1 to 9, wherein the control keys (29, 31, 33, 35, 37) are configured such that they can be operated in two ways, whereby in only one case the speech dialog system (18) is activated.

11. Apparatus according to one of claims 1 to 10, wherein at least one of the predetermined control keys (29, 31, 33, 35, 37) is a hardkey.

12. Vehicle with an apparatus according to one of claims 1 to 11.

13. Method for controlling at least one electronic device (3, 5, 7, 9, 11, 13, 15), each electronic device (3, 5, 7, 9, 11, 13, 15) comprising at least one control key (29, 31, 33, 35, 37) for controlling the electronic device (3, 5, 7, 9, 11, 13, 15), comprising the steps of
activating a speech dialog system (18) for controlling at least one of the at least one electronic devices (3, 5, 7, 9, 11, 13, 15) upon operation of at least one predetermined control key (29, 31, 33, 35, 37) of an electronic device (3, 5, 7, 9, 11, 13, 15) controllable by the SDS system, and
activating a vocabulary set enabling the speech dialogue system (17) to turn on or to switch to one of the other electronic devices (3, 5, 7, 9, 11, 13, 15) operable by the speech dialogue system- (18) upon receipt of a corresponding speech command, if one electronic device (3, 5, 7, 9, 11, 13, 15) operable by the speech dialogue system (18) is already turned on and a control key (29, 31, 33, 35, 37) of this electronic device (3, 5, 7, 9, 11, 13, 15) is operated.

14. Method according to claim 13, wherein the step of activating comprises activating a predetermined vocabulary set, in particular the vocabulary set corresponding to the operated control key (29, 31, 33, 35, 37).

15. Method according to claim 13 or 14, further comprising the step of terminating the speech dialog system (18) upon detection of a corresponding speech command.

16. Method according to one of claims 13 to 15, further comprising the step of terminating the speech dialog system (18) after a predetermined period during which no oral command has been detected by the speech dialog system (18).

17. Computer programme product directly loadable into an internal memory of a digital computer, comprising software code portions for performing the steps of the method according to one of the claims 13 to 16.

18. Computer programme product stored on a medium readable by a computer system comprising computer readable program means for causing a computer to perform steps of the method according to one of the claims 13 to 16 when run on the computer.

## Patentansprüche

1. Vorrichtung zum Steuern wenigstens einer elektronischen Einrichtung (3, 5, 7, 9, 11, 13, 15), wobei jede Einrichtung (3, 5, 7, 11, 13, 15) wenigstens eine Bedientaste (29, 31, 33, 35, 37) zum Bedienen der elektronischen Einrichtung umfasst, und die Vorrichtung umfasst:
ein Sprachdialogsystem (18) zum Bedienen wenigstens einer der elektronischen Einrichtungen (3, 5, 7, 11, 13, 15), und
wobei das Sprachdialogsystem (18) aktiviert wird, wenn wenigstens eine vorgegebene Bedientaste (29, 31, 33, 35, 37) einer elektronischen Einrichtung (3, 5, 7, 9, 11, 13, 15), die mit dem Sprachdialogsystem (18) bedient werden kann, betätigt wird,
**dadurch gekennzeichnet, dass**
das Sprachdialogsystem (18) so konfiguriert ist, dass, wenn eine elektronische Einrichtung (3, 5, 7, 9, 11, 13, 15), die mit dem Sprachdialogsystem (18) betätigt werden kann, bereits eingeschaltet ist und eine Bedientaste (29, 31, 33, 35, 37) dieser elektronischen Einrichtung (3, 5, 7, 9, 11, 13, 15) betätigt wird, ein Vokabularsatz aktiviert wird, der das Sprachdialogsystem (18) befähigt, eine der anderen elektronischen Einrichtungen, die mit dem Sprachdialogsystem (18) betätigt werden kann, beim Empfang eines entsprechenden Sprachbefehls anzuschalten oder auf sie umzuschalten.

2. Vorrichtung nach Anspruch 1, wobei wenigstens eine vorgegebene Bedientaste (29, 31, 33, 35, 37) den An-/Aus-Schatter der elektronischen Einrichtung (3, 5, 7, 9, 11, 13, 15) umfasst.

3. Vorrichtung nach Anspruch 1 oder 2, wobei die wenigstens eine vorgegebene Bedientaste (29, 31, 33, 35, 37) wenigstens eine der Tasten (29, 31, 33, 35, 37) umfasst, mit denen die elektronische Einrichtung (3, 5, 7, 9, 11, 13, 15) bedient wird, wenn die elektronische Einrichtung (3, 5, 7, 9, 11, 13, 15) bereits angeschaltet worden ist.

4. Vorrichtung nach einem der Ansprüche 1 bis 3, wobei ein vorgegebener Vokabular-Satz in Abhängigkeit von der betätigten Bedientaste (29, 31, 33, 35, 37) aktiviert wird.

5. Vorrichtung nach einem der Ansprüche 1 bis 4, wobei das Sprachdialogsystem (18) einen Vokabular-Satz für jede elektronische Einrichtung (3, 5, 7, 9, 11, 13, 15) umfasst, die durch das Sprachdialogsystem (18) betätigt werden kann, und wobei das Sprachdialogsystem (18) so konfiguriert ist, dass, wenn eine vorgegebene Bedientaste (29, 31, 33, 35, 37) einer elektronischen Einrichtung (3, 5, 7, 9, 11, 13, 15), die mit dem Sprachdialogsystem (18) betätigt werden kann, betätigt wird, der entsprechende Vokabular-Satz aktiviert wird.

6. Vorrichtung nach einem der Ansprüche 1 bis 5, die des weiteren eine akustische und/oder optische Ausgabeeinrichtung (23, 25, 27) umfasst, die so konfiguriert ist, dass sie eine Nachricht ausgibt, nachdem das Sprachdialogsystem (18) aktiviert worden ist, und insbesondere über die angeschaltete elektronische Einrichtung (3, 5, 7, 9, 11, 13, 15) und/oder die Aktivierung des Sprachdialogsystems (18) informiert.

7. Vorrichtung nach einem der Ansprüche 1 bis 6, die des Weiteren eine Taste (39), insbesondere eine feste Funktionstaste, zum Anschalten und/oder Abschalten des Sprachdialogsystems (18) umfasst.

8. Vorrichtung nach einem der Ansprüche 1 bis 7, wobei das Sprachdialogsystem (18) so konfiguriert ist, dass es abschaltet, wenn ein entsprechender Sprachbefehl erfasst wird.

9. Vorrichtung nach einem der Ansprüche 1 bis 8, wobei das Sprachdialogsystem (18) so konfiguriert ist, dass es nach einer vorgegebenen Periode abschaltet, während der kein Sprachbefehl erfasst worden ist.

10. Vorrichtung nach einem der Ansprüche 1 bis 9, wobei die Bedientasten (29, 31, 33, 35, 37) so konfiguriert sind, dass sie auf zweierlei Weise betätigt werden können, wobei in nur einem Fall das Sprachdialogsystem (18) aktiviert wird.

11. Vorrichtung nach einem der Ansprüche 1 bis 10, wobei wenigstens eine der vorgegebenen Bedientasten (29, 31, 33, 35, 37) eine feste Funktionstaste ist.

12. Fahrzeug mit einer Vorrichtung nach einem der Ansprüche 1 bis 11.

13. Verfahren zum Bedienen wenigstens einer elektronischen Einrichtung (3, 5, 7, 9, 11, 13, 15), wobei jede elektronische Einrichtung (3, 5, 7, 9, 11, 13, 15) wenigstens eine Bedientaste (29, 31, 33, 35, 37) zum Bedienen der elektronischen Einrichtung (3, 5, 7, 9, 11, 13, 15) umfasst, und das Verfahren die folgenden Schritte umfasst:
Aktivieren eines Sprachdialogsystems (18) zum Bedienen wenigstens einer der wenigstens einen elektronischen Einrichtung (3, 5, 7, 9, 11, 13, 15) bei Betätigung wenigstens einer vorgegebenen Bedientaste (29, 31, 33, 35, 37) einer elektronischen Einrichtung (3, 5, 7, 9, 11, 13, 15), die mit dem Sprachdialogsystem bedient werden kann, und
Aktivieren eines Vokabular-Satzes, der das Sprachdialogsystem (17) befähigt, eine der anderen elektronischen Einrichtung (3, 5, 7, 9, 11, 13, 15), die mit dem Sprachdialogsystem (18) betätigt werden können, beim Empfang eines entsprechenden Sprachbefehls anzuschalten oder auf sie umzuschalten, wenn eine elektronische Einrichtung (3, 5, 7, 9, 11, 13, 15), die mit dem Sprachdialogsystem (18) betätigt werden kann, bereits angeschaltet ist und eine Bedientaste (29, 31, 33, 35, 37) dieser elektronischen Einrichtung (3, 5, 7, 9, 11, 13, 15) betätigt wird.

14. Verfahren nach Anspruch 13, wobei der Schritt des Aktivierens das Aktivieren eines vorgegebenen Vokabular-Satzes, insbesondere des Vokabular-Satzes umfasst, der der betätigten Bedientaste (29, 31, 33, 35, 37) entspricht.

15. Verfahren nach Anspruch 13 oder 14, das des Weiteren den Schritt des Beendens des Sprachdialogsystems (18) beim Erfassen eines entsprechenden Sprachbefehls umfasst.

16. Verfahren nach einem der Ansprüche 13 bis 15, das des Weiteren den Schritt des Beendens des Sprachdialogsystems (18) nach einer vorgegebenen Periode umfasst, während der kein Sprachbefehl durch das Sprachdialogsystem (18) erfasst worden ist.

17. Computerprogrammeerzeugnis, das direkt in einen internen Speicher eines digitalen Computers geladen werden kann und Software-Code-Abschnitte zum Durchführen der Schritte des Verfahrens nach einem der Ansprüche 13 bis 16 umfasst.

18. Computerprogrammeerzeugnis, das auf einem Medium gespeichert ist, das von einem Computersystem gelesen werden kann und computeriesbare Programmmittel umfasst, die einen Computer veranlassen, Schritte des Verfahrens nach einem der Ansprüche 13 bis 16 durchzuführen, wenn sie auf dem Computer ausgeführt werden.

## Revendications

1. Appareil pour contrôler au moins un dispositif électronique (3, 5, 7, 9, 11, 13, 15), chaque dispositif (3, 5, 7, 9, 11, 13, 15) comprenant au moins une touche de contrôle (29, 31, 33, 35, 37) pour contrôler le dispositif électronique (3, 5, 7, 9, 11, 13, 15), comprenant
un système de dialogue vocal (18) pour contrôler au moins un du au moins un dispositif électronique (3, 5, 7, 9, 11, 13, 15), et
dans lequel le système de dialogue vocal (18) est activé lorsque au moins une touche de contrôle prédéterminée (29, 31, 33, 35, 37) d'un dispositif électronique (3, 5, 7, 9, 11, 13, 15) pouvant être contrôlée par le système de dialogue vocal (18) est opérée,
**caractérisé en ce que**
le système de dialogue vocal (18) est configuré de telle sorte que si un dispositif électronique (3, 5, 7, 9, 11, 13, 15) pouvant être opéré par le système de dialogue vocal (18) est déjà allumé et une touche de contrôle (29, 31, 33, 35, 37) de ce dispositif électronique (3, 5, 7, 9, 11, 13, 15) est opérée, un ensemble de vocabulaire est activé permettant au système de dialogue vocal (18) d'allumer ou de commuter vers un des autres dispositifs électroniques (3, 5, 7, 9, 11, 13, 15) pouvant être opérés par le système de dialogue vocal (18) lors de la réception d'une commande vocale correspondante.

2. Appareil selon la revendication 1, dans lequel la au moins une touche de contrôle prédéterminée (29, 31, 33, 35, 37) comprend le commutateur marche/arrêt du dispositif électronique (3, 5, 7, 9, 11, 13, 15).

3. Appareil selon la revendication 1 ou 2, dans lequel la au moins une touche de contrôle prédéterminée (29, 31, 33, 35, 37) comprend au moins une des touches (29, 31, 33, 35, 37) contrôlant le dispositif électronique (3, 5, 7, 9, 11, 13, 15) lorsque le dispositif électronique (3, 5, 7, 9, 11, 13, 15) a déjà été activé.

4. Appareil selon l'une des revendications 1 à 3, dans lequel un ensemble de vocabulaire prédéterminé est activé en fonction de la touche de contrôle opérée (29, 31, 33, 35, 37).

5. Appareil selon l'une des revendications 1 à 4, dans lequel le système de dialogue vocal (18) comprend un ensemble de vocabulaire pour chaque dispositif électronique (3, 5, 7, 9, 11, 13, 15) pouvant être opéré par le système de dialogue vocal (18) et dans lequel le système de dialogue vocal (18) est configuré de telle sorte que lorsqu'une touche de contrôle prédéterminée (29, 31, 33, 35, 37) d'un dispositif électronique (3, 5, 7, 9, 11, 13, 15) pouvant être opérée par le système de dialogue vocal (18) est opérée, l'ensemble de vocabulaire correspondant est activé.

6. Appareil selon l'une des revendications 1 à 5, comprenant en outre des moyens de sortie acoustiques et/ou optiques (23, 25, 27) étant configurés pour émettre en sortie un message une fois que le système de dialogue vocal (18) a été activé, en particulier, donnant une information concernant le dispositif électronique allumé (3, 5, 7, 9, 11, 13, 15) et/ou sur l'activation du système de dialogue vocal (18).

7. Appareil selon l'une des revendications 1 à 6, comprenant en outre une touche (39), en particulier une touche dure, pour allumer et/ou éteindre le système de dialogue vocal (18).

8. Appareil selon l'une des revendications 1 à 7, dans lequel le système de dialogue vocal (18) est configuré de telle sorte qu'il s'éteint lorsqu'une commande vocale correspondante est détectée.

9. Appareil selon l'une des revendications 1 à 8, dans lequel le système de dialogue vocal (18) est configuré de telle sorte qu'il s'éteint après une période prédéterminée pendant laquelle aucune commande vocale n'a été détectée.

10. Appareil selon l'une des revendications 1 à 9, dans lequel les touches de contrôle (29, 31, 33, 35, 37) sont configurées de telle sorte qu'elles peuvent être opérées de deux manières, avec seulement dans un cas, le système de dialogue vocal (18) qui est activé.

11. Appareil selon l'une des revendications 1 à 10, dans lequel au moins une des touches de contrôle prédéterminées (29, 31, 33, 35, 37) est une touche dure.

12. Véhicule avec un appareil selon l'une des revendications 1 à 11.

13. Procédé pour contrôler au moins un dispositif électronique (3, 5, 7, 9, 11, 13, 15), chaque dispositif électronique (3, 5, 7, 9, 11, 13, 15) comprenant au moins une touche de contrôle (29, 31, 33, 35, 37) pour contrôler le dispositif électronique (3, 5, 7, 9, 11, 13, 15), ledit procédé comprenant les étapes consistant à :
activer un système de dialogue vocal (18) pour contrôler au moins un des au moins un dispositif électronique (3, 5, 7, 9, 11, 13, 15) lors de l'opération d'au moins une touche de contrôle prédéterminée (29, 31, 33, 35, 37) d'un dispositif électronique (3, 5, 7, 9, 11, 13, 15) pouvant être contrôlé par le système SDS, et
activer un ensemble de vocabulaire permettant au système de dialogue vocal (17) d'allumer ou de commuter un des autres dispositifs électroniques (3, 5, 7, 9, 11, 13, 15) pouvant être opérés par le système de dialogue vocal (18) lors de la réception d'une commande vocale correspondante, si un dispositif électronique (3, 5, 7, 9, 11, 13, 15) pouvant être opéré par le système de dialogue vocal (18) est déjà allumé et une touche de contrôle (29, 31, 33, 35, 37) de ce dispositif électronique (3, 5, 7, 9, 11, 13, 15) est opérée.

14. Procédé selon la revendication 13, dans lequel l'étape d'activation comprend l'activation d'un ensemble de vocabulaire prédéterminé, en particulier l'ensemble de vocabulaire correspondant- à la touche de contrôle opérée (29, 31, 33, 35, 37).

15. Procédé selon la revendication 13 ou 14, comprenant en outre l'étape consistant à arrêter le système de dialogue vocal (18) lors de la détection d'une commande vocale correspondante.

16. Procédé selon l'une des revendications 13 à 15, comprenant en outre l'étape consistant à arrêter le système de dialogue vocal (18) après une période prédéterminée pendant laquelle aucune commande orale n'a été détectée par le système de dialogue vocal (18).

17. Produit de programme d'ordinateur pouvant être directement chargé dans une mémoire interne d'un ordinateur numérique, comprenant des parties de code logicielles pour réaliser les étapes du procédé selon l'une des revendications 13 à 16.

18. Produit de programme d'ordinateur stocké sur un support pouvant être lu par un système d'ordinateur comprenant des moyens de programme pouvant être lus par ordinateur pour entraîner qu'un ordinateur réalise les étapes du procédé selon l'une des revendications 13 à 16 lors du fonctionnement sur l'ordinateur.
